# EUROPEAN PATENT SPECIFICATION

(11) **EP 3 917 124 B1**
(45) Date of publication and mention of the grant of the patent: **24.07.2024**
(21) Application number: 21170650.2
(22) Date of filing: 27.04.2021
(51) Int. Cl.: H04N 1/00, H04N 1/06, B41M 5/00

(54) **INSPECTION DEVICE, IMAGE FORMING SYSTEM, INSPECTION METHOD, AND INSPECTION PROGRAM**
INSPEKTIONSVORRICHTUNG, BILDERZEUGUNGSSYSTEM, INSPEKTIONSVERFAHREN UND INSPEKTIONSPROGRAMM
DISPOSITIF D'INSPECTION, SYSTÈME DE FORMATION D'IMAGES, PROCÉDÉ D'INSPECTION ET PROGRAMME D'INSPECTION

(30) Priority: 28.05.2020 JP 2020093313
(43) Date of publication of application: 01.12.2021
(73) Proprietor: Konica Minolta, Inc., Tokyo 100-7015 (JP)
(72) Inventor: Nakano, Tatsuya, Chiyoda-ku (JP)
(74) Representative: Hoffmann Eitle

(56) References cited:
- JP-A- 2017 188 713
- US-A1- 2019 354 328
- US-A1- 2019 387 126

## Description

### Background

### Technological Field

The present invention relates to an inspection device, an image forming system, an inspection method, and an inspection program.

### Description of the Related art

In an inspection device that inspects (hereinafter, also referred to as "inspects") a quality of a printed matter obtained by printing a document image, an automatic inspection technology of automatically inspecting by comparing a scanned image obtained by scanning a print surface of the printed matter with the document image is known. Such automatic inspection technology may save labor of a user to visually check stains and wrinkles on the print surface of the printed matter to inspect the quality, so that this contributes to laver-saving especially in a production printing site where printing of a large amount is performed.

In recent years, in a field of production printing, opportunities to print on a transparent material (for example, a transparent sheet and the like) are increasing. Printing on the transparent material includes "front printing" and "back printing". The "front printing" is printing on the assumption that, for example, the document image is printed on a front surface of the transparent material and a printed image is seen from the front surface (print surface) of the transparent material, as in printing on normal paper. In contrast, the "back printing" is printing on the assumption that the document image is printed on a back surface of the transparent material after being mirror-inverted (right/left side inversion) and the printed image is seen from the front surface side (opposite to the print surface) of the transparent material. Since the printed image that is back printed is seen through the transparent material, the printed image becomes shiny by the transparent material, and the print surface may be prevented from being worn or contaminated. As a technology regarding the back printing of the transparent material, for example, the technology disclosed in JP 2019-201264 A is known.

However, in the back printing, in a case where a layer of the printed image is thin, such as in a case where the printed image is of a single color, for example, an object (background) across the transparent material might be seen through the printed image. For example, in a case where there is a wall across the printed matter, the background might be seen through the printed image, and an appearance of the printed image might change depending on a pattern on the wall. In a case where it is not preferable that the background is seen through, there is a method of preventing transparency by overlapping an anti-transparency image (for example, a solid white image) on the printed image. As a result, in a case where the printed matter be seen from the front surface of the transparent material, the anti-transparency image is formed on the printed image, so that light from the background is blocked and the background is prevented from being seen through.

However, in a case where the printed matter on which the anti-transparency image is formed is inspected, the conventional inspection device scans the anti-transparency image and reads the anti-transparency image, so that there is a problem that the inspection cannot be performed appropriately.

JP 2017188713 A discloses an image inspection apparatus and an image inspection program for inspecting an image on a reading surface of a sheet on which images are formed on both sides. The image inspection device comprises: a patch image storage part for inspection for storing a patch image for read surface inspection obtained by reading a patch image formed on a surface of a paper sheet and a patch image for set-off inspection obtained by the patch image for inspection formed on the paper sheet from a side opposite to an image formation surface; a mirror image storage part for storing a mirror image that is a mirror image of an image formed on a surface opposite to the surface read by a first reading part; and an abnormal image discrimination part for collating a read image which is read by the first reading part, with a document image of the image formed on the read surface of the paper sheet, thereby discriminating the presence/absence of abnormality in the read image. In the case where there is abnormality in the read image, when a printing part of the mirror image is present at least at a position where the abnormality occurs, the abnormal image discrimination part collates the read image with the patch image for set-off inspection, thereby discriminating quality of the abnormality in the read image.

### Summary

The present invention is achieved in view of the above-described circumstances, and an object thereof is to provide an inspection device, an image forming system, an inspection method, and an inspection program capable of appropriately performing an inspection even in a case where a printed matter on which an anti-transparency image is formed is inspected.

To achieve the abovementioned object, according to an aspect of the present invention, there is provided an inspection device in accordance with claim 1.

The present invention also proves an image forming system, in accordance with claim 8.

The present invention also proves an inspection method of an inspection device, in accordance with claim 9.

The present invention also provides an inspection program, in accordance with claim 14.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a schematic cross-sectional view of an image forming system of one embodiment;
Fig. 2 is a schematic block diagram of the image forming system illustrated in Fig. 1;
Fig. 3 is a schematic block diagram illustrating a configuration of a control unit of the image forming device illustrated in Fig. 2;
Fig. 4 is a schematic block diagram illustrating a configuration of a control unit of an inspection device illustrated in Fig. 2;
Fig. 5 is a schematic diagram illustrating a printing operation of the image forming system;
Fig. 6 is a flowchart illustrating a procedure of an inspection method in the inspection device;
Fig. 7 is a schematic diagram for illustrating the inspection method in a case where an anti-transparency image is not formed;
Fig. 8 is a subroutine flowchart illustrating a procedure of inspection of a printed matter that is back printed in the flowchart in Fig. 6;
Figs. 9A and 9B are schematic diagrams illustrating correcting a pixel value of a document image according to a hue of a transparent sheet; and
Fig. 10 is a schematic diagram illustrating a setting screen regarding quality inspection of a printed matter.

### Detailed Description of Embodiments

Hereinafter, one or more embodiments of the present invention will be described with reference to the drawings. However, the scope of the invention is not limited to the disclosed embodiments. Note that, in the description of the drawings, the same elements are assigned with the same reference signs, and the description thereof is not repeated. Dimensional ratios of the drawings are exaggerated for convenience of illustration and might differ from actual ratios.

### <Image Forming System 100>

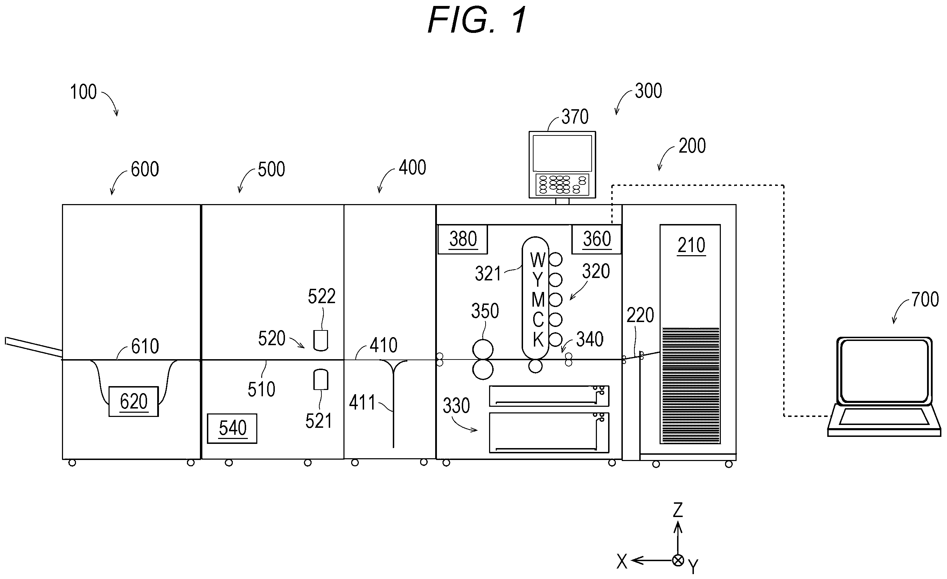

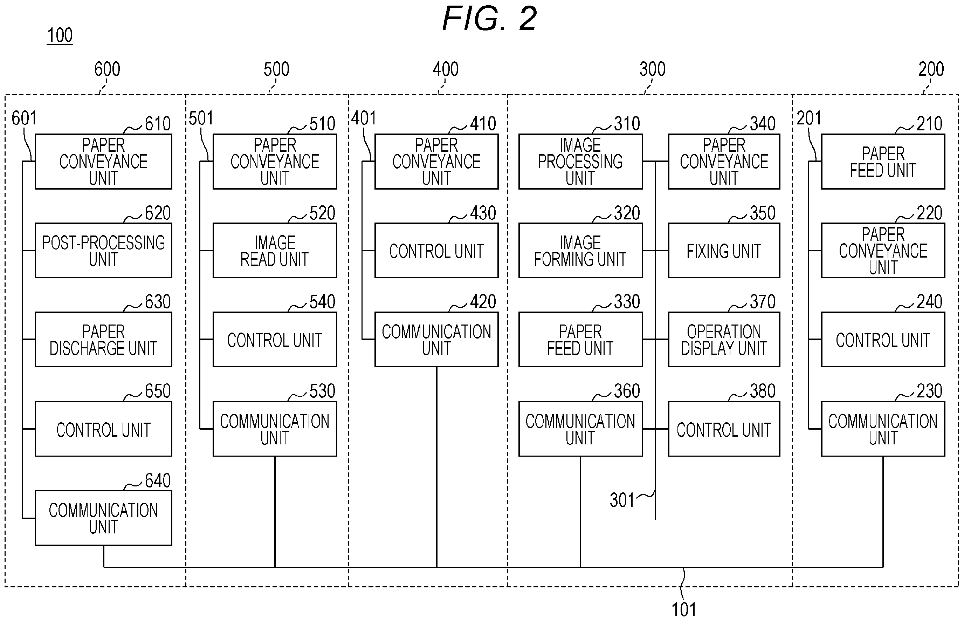

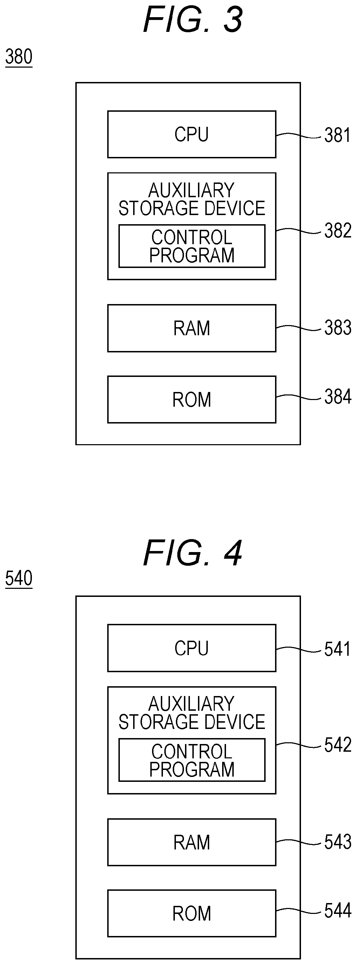

Fig. 1 is a schematic cross-sectional view of an image forming system 100 of one embodiment, and Fig. 2 is a schematic block diagram of the image forming system 100 illustrated in Fig. 1. Fig. 3 is a schematic block diagram illustrating a configuration of a control unit 380 of an image forming device 300 illustrated in Fig. 2, and Fig. 4 is a schematic block diagram illustrating a configuration of a control unit 540 of an inspection device 500 illustrated in Fig. 2.

As illustrated in Fig. 1, the image forming system 100 of this embodiment includes a paper feeding device 200, the image forming device 300, a paper conveyance device 400, the inspection device 500, a post-processing device 600, and a client terminal 700 connected in series in an X direction (paper conveyance direction). Note that a configuration of the image forming system 100 illustrated in Fig. 1 is an example, and types and the number of devices included in the image forming system 100 are not limited to those in the example illustrated in Fig. 1.

### <Paper Feeding Device 200>

The paper feeding device 200 supplies a recording material to the image forming device 300 in response to an instruction of the image forming device 300. As illustrated in Figs. 1 and 2, the paper feeding device 200 includes a paper feeding unit 210, a paper conveyance unit 220, a communication unit 230, and a control unit 240. The paper feeding unit 210, the paper conveyance unit 220, the communication unit 230, and the control unit 240 are connected to each other by an internal bus 201 so as to be able to communicate with each other.

The paper feeding unit 210 is provided with at least one paper feeding tray, and accommodates a transparent material (for example, a transparent sheet) as the recording material used in printing. "Transparency" includes complete transparency and translucency (colored transparency and the like). The transparent sheet (hereinafter, also simply referred to as a "sheet") may be, for example, a transparent resin sheet (film). In this embodiment, it is assumed that the sheet has no pattern and the like, that is, this is a plain sheet. The sheets accommodated in the paper feeding tray are supplied to the image forming device 300 one by one by a plurality of conveyance roller pairs along a conveyance path of the paper conveyance unit 220.

The communication unit 230 exchanges control signals and data with the image forming device 300. The control unit 240 controls the paper feeding unit 210, the paper conveyance unit 220, and the communication unit 230.

### <Image Forming Device 300>

The image forming device 300 receives a print job including print data and print setting data in a page description language (PDL) format from an external client terminal 700 via a network, and prints an image on the sheet based on this. The client terminal 700 may be, for example, a personal computer, a tablet terminal, a smartphone and the like. The print setting data includes information regarding the number of pages, the number of copies, a type (transparent sheet, paper and the like), a size, and a basis weight of recording material, inspection function setting, front printing/back printing setting, anti-transparency image setting and the like.

The image forming device 300 includes an image processing unit 310, an image forming unit 320, a paper feeding unit 330, a paper conveyance unit 340, a fixing unit 350, a communication unit 360, an operation display unit 370, and a control unit 380. These components are connected to each other by an internal bus 301 so as to be able to communicate with each other.

The image processing unit 310 generates printed image data based on the print setting information and print data included in the print job received by the communication unit 360. The generated printed image data is transmitted to the image forming unit 320.

The image forming unit 320 forms an image on the sheet based on the printed image data by using a well-known image forming process such as an electrophotographic method including steps of charging, exposing, developing, and transferring. The image forming unit 320 includes a photoreceptor drum as an image carrier, and a charge unit, an optical write unit, a development device, and a transfer unit arranged around the same for each color of yellow (Y), magenta (M), cyan (C), black (K), and white (W).

Yellow (Y), magenta (M), cyan (C), black (K), and white (W) toner images are formed on each photoreceptor drum. The toner images are sequentially overlapped to be primarily transferred to an intermediate transfer belt 321 of the transfer unit. The toner images primarily transferred to the intermediate transfer belt 321 are secondarily transferred to the sheet.

In this embodiment, toner of yellow (Y), magenta (M), and cyan (C) is preferably toner having an excellent melting property and a sharp melting property to melt at low temperature in a short time. Colors of toner having the sharp melting property are easily mixed and a color reproduction range of an image obtained by copying is wide, so that a color image sticking to an original document may be obtained.

The toner having such sharp melting property may be manufactured by, for example, a known pulverization method or polymerization method by adding a coloring material and the like to a binder resin such as a polyester resin or a styrene-acrylic resin.

In contrast, as for white toner, a storage elastic modulus of the binding resin is set to a value of 5 to 100 times, preferably 10 to 100 times the storage elastic modulus of the binding resin of color toner at softening temperature of the binding resin of the color toner. In a case where the storage elastic modulus is smaller than five times and is close to that of the binding resin of the color toner, the white toner might melt at the time of fixing to cause color mixing with the color toner, and colors of a color image to be reproduced might become whitish to deteriorate an image quality. Furthermore, a white image does not become a layer independent from the color image, so that this cannot serve as an anti-transparency image. In contrast, when the binder resin becomes highly elastic with the storage elastic modulus of 100 times or larger, a heating amount for fixing the white toner to the sheet increases, so that this might cause a state in which the color toner is over-melted. As a result, so-called high temperature offset might occur. In order to avoid this, it is necessary to set to 100 times or smaller.

A type of the binding resin of the white toner may be appropriately selected from known binding resins for toner such as a polyester resin and a styrene acrylic resin that satisfy the above-described storage elastic modulus conditions. Furthermore, as pigment of the white toner, one or more materials such as titanium oxide, zinc oxide, barium sulfate, alumina, and calcium carbonate may be used. A charge additive such as a charge control agent may be added as needed.

The paper feeding unit 330 supplies the sheet to the image forming unit 320. The paper feeding unit 330 includes a plurality of paper feeding trays, and each paper feeding tray may accommodate sheets having different sizes such as A4 size and A3 size, for example.

The paper conveyance unit 340 includes a conveyance path and a plurality of conveyance roller pairs, and conveys paper in the image forming device 300. The paper conveyance unit 340 is provided with a paper inversion unit and a circulation conveyance unit, and may invert front and back sides of the sheet after the fixing to discharge, or may form images on both surfaces of the sheet.

The fixing unit 350 fixes the toner image formed on the sheet. The fixing unit 350 is provided with a hollow heating roller in which a heater is arranged, and a pressurizing roller opposite to the heating roller. The heating roller and the pressurizing roller are controlled at predetermined temperature (for example, 100°C or higher) by the heater, and apply a heating/pressurizing process to the sheet to fix the toner image.

The sheet to which the image is fixed is supplied to the paper conveyance device 400 through a paper discharge unit (not illustrated).

The communication unit 360 is connected to, for example, the client terminal 700 via the network, and transmits/receives data such as the print job.

The operation display unit 370 includes an input unit and an output unit. The input unit is provided with, for example, a keyboard, a button, and a touch panel, and is used for a user to perform various instructions (inputs) such as a character input and various settings by the keyboard, and a print starting instruction by a print starting button. The output unit is provided with a display and is used to present an execution status and the like of the print job to the user.

The control unit 380 controls the image processing unit 310, the image forming unit 320, the paper feeding unit 330, the paper conveyance unit 340, the fixing unit 350, the communication unit 360, and the operation display unit 370. As illustrated in Fig. 3, the control unit 380 includes a CPU 381, an auxiliary storage device 382, a RAM 383, and a ROM 384.

The CPU 381 executes a control program for an image forming device and realizes various functions. The control program described above is stored in the auxiliary storage device 382, and is loaded into the RAM 383 when this is executed by the CPU 381. The auxiliary storage device 382 is provided with, for example, a large-capacity storage device such as a hard disk drive, a solid state drive (SSD), and a flash memory. The RAM 383 stores an arithmetic result and the like associated with the execution of the CPU 381. Various parameters, various programs and the like are stored in the ROM 384.

### <Paper Conveyance Device 400>

The paper conveyance device 400 conveys the sheet supplied from the image forming device 300 to the inspection device 500 as it is or after inverting the front and back sides of the same according to an instruction of the control unit 380. The paper conveyance device 400 includes a paper conveyance unit 410, a communication unit 420, and a control unit 430. These components are connected to each other by an internal bus 401 so as to be able to communicate with each other. The paper conveyance unit 410 includes a conveyance path for conveying the sheet and a plurality of conveyance roller pairs. The paper conveyance unit 410 includes a paper inversion unit 411 for inverting the front and back sides. The communication unit 420 exchanges control signals and data between the control unit 430 and the image forming device 300. The control unit 430 controls the paper conveyance unit 410 and the communication unit 420.

### <Inspection Device 500>

The inspection device 500 inspects a quality of the printed image printed on the sheet conveyed from the paper conveyance device 400 in response to an instruction of the control unit 380. The inspection device 500 includes a paper conveyance unit 510, an image read unit 520, a communication unit 530, and a control unit 540. These components are connected to each other by an internal bus 501 so as to be able to communicate with each other.

The paper conveyance unit 510 is provided with a conveyance path and a plurality of conveyance roller pairs, and conveys the sheet supplied from the image forming device 300 toward the post-processing device 600 along the conveyance path.

The image read unit 520 includes in-line sensors (hereinafter referred to as "scanners") 521 and 522 installed on a lower side and an upper side across the conveyance path of the paper conveyance unit 510. The lower scanner 521 and the upper scanner 522 serve as a first reader and a second reader, respectively, and are formed to be able to independently operate according to an instruction of the control unit 540.

The lower scanner 521 reads a lower surface of a printed matter (the sheet on which the printed image is formed by the image forming device 300) conveyed along the conveyance path. That is, the lower scanner 521 reads the printed image (formed on a front surface) of the printed matter that is back printed from a back surface side of the sheet through the sheet of the printed matter. The upper scanner 522 reads an upper surface of the printed matter conveyed along the conveyance path. That is, the upper scanner 522 reads the printed image of the printed matter that is back printed from a print surface side (front surface side) of the printed matter. Data of scanner images (read images) read by the scanners 521 and 522 are transmitted to the control unit 540.

The communication unit 530 exchanges control signals and data between the control unit 540 and the image forming device 300.

The control unit 540 controls the paper conveyance unit 510, the image read unit 520, and the communication unit 530. As illustrated in Fig. 4, the control unit 540 includes a CPU 541, an auxiliary storage device 542, a RAM 543, and a ROM 544.

The CPU 541 executes an inspection program and realizes various functions. The inspection program is stored in the auxiliary storage device 542, and is loaded into the RAM 543 when this is executed by the CPU 541. The auxiliary storage device 542 is provided with, for example, a large-capacity storage device such as a hard disk drive, a solid state drive (SSD), and a flash memory. The RAM 543 stores an arithmetic result and the like associated with the execution of the CPU 541. Various parameters, various programs and the like are stored in the ROM 544.

In this embodiment, the control unit 540 serves as an image obtainer that obtains a document image from the control unit 380. The control unit 540 also serves as an abnormality detector, and detects abnormality of the printed matter based on the document image and the scanned image (read image) by the lower scanner 521 or the upper scanner 522. A state in which the printed matter is abnormal means a state in which the printed matter has stain, wrinkle, stripe, dot and the like. More specifically, the abnormality detector compares pixel values in corresponding pixel positions between an inverted image obtained by mirror-inverting the document image (right/left inversion with respect to a central axis) and the scanned image, thereby determining whether the printed matter is abnormal.

The abnormality detector may also be formed to determine whether the printed matter is abnormal depending on whether a comparison result between the document image and the read image satisfies a predetermined inspection criterion. The abnormality detector determines that the printed matter is normal in a case where the comparison result satisfies the predetermined inspection criterion, and determines that the printed matter is abnormal in a case where the comparison result does not satisfy the predetermined inspection criterion. The predetermined inspection criterion is a determination criterion when determining whether the printed matter is abnormal based on the comparison result between the document image and the scanned image. A specific method of detecting abnormality of the printed matter is described later.

The control unit 540 also serves as a material information obtainer that obtains information regarding a transparent material. The material information obtainer obtains, for example, a size, a basis weight, and hue information of the sheet from the print setting information. The control unit 540 also serves as an inspection criterion adjuster that adjusts the predetermined inspection criterion based on the information obtained by the material information obtainer. The inspection criterion adjuster obtains information regarding the basis weight or thickness of the sheet, and adjusts the predetermined inspection criterion according to the basis weight or thickness. A specific example of adjustment of the predetermined inspection criterion is described later. Furthermore, the control unit 540 serves as a pixel value corrector that corrects the pixel value of the document image based on the hue information obtained by the material information obtainer. A change in pixel value of the document image is also described later.

### <Post-Processing Device 600>

The post-processing device 600 conveys or performs post-processing on the paper supplied from the inspection device 500 according to an instruction of the control unit 380, and discharges the same out of the image forming system 100. The post-processing device 600 includes a paper conveyance unit 610, a post-processing unit 620, a paper discharge unit 630, a communication unit 640, and a control unit 650. These components are connected to each other by an internal bus 601 so as to be able to communicate with each other.

The paper conveyance unit 610 is provided with a conveyance path and a plurality of conveyance roller pairs, conveys the printed matter supplied from the inspection device 500 along the conveyance path, and supplies the same to the post-processing unit 620 or the paper discharge unit 630.

The post-processing unit 620 performs the post-processing on the conveyed printed matter. Examples of the post-processing include punching, cutting and the like, for example.

The paper discharge unit 630 is provided with a paper discharge tray and a paper discharge roller pair, and discharges the sheet supplied from the inspection device 500 and conveyed along the conveyance path or the sheet subjected to the post-processing to the paper discharge tray.

The communication unit 640 exchanges control signals and data between the control unit 650 and the image forming device 300. The control unit 650 controls the paper conveyance unit 610, the post-processing unit 620, the paper discharge unit 630, and the communication unit 640.

### <Printing Operation of Image Forming System 100>

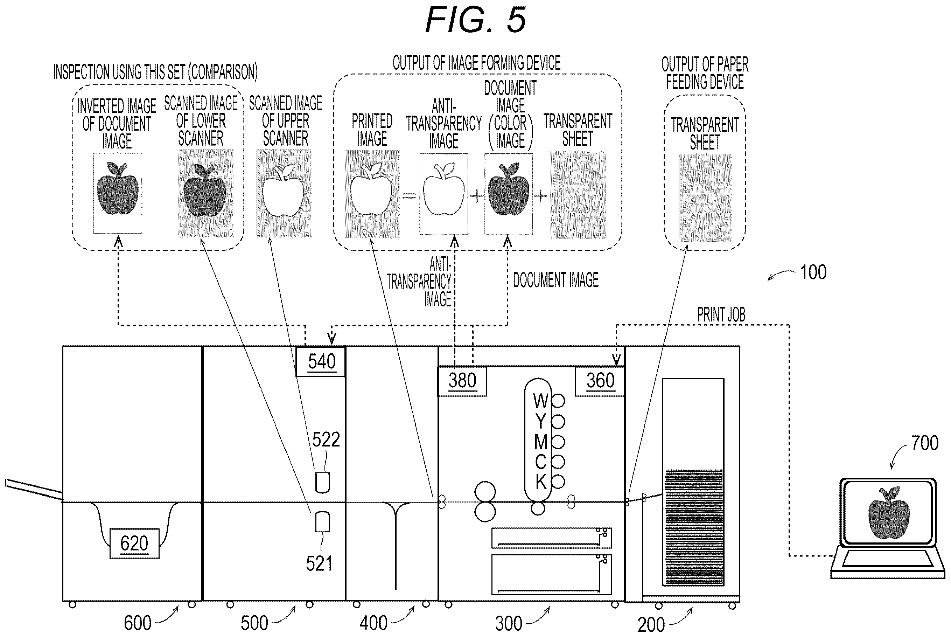

Fig. 5 is a schematic diagram illustrating a printing operation of the image forming system 100. In this embodiment, a case is described where the user prints a document edited by using, for example, document creating software or drawing software on the client terminal 700 by the image forming device 300, and inspects (inspects) the quality of the printed matter by the inspection device 500.

A printer driver of the client terminal 700 generates the print job of the document edited by the user and transmits the same to the image forming system 100. The image forming system 100 receives the print job via the communication unit 360 and transmits the same to the image processing unit 310. The print job includes, for example, a document image of "apple" as the print data.

Note that, in the example illustrated in Fig. 5, a display of the client terminal 700 displays an image of "apple" that is back printed as seen from the print surface (back surface) side. In back printing, it is assumed that the document image "apple" is printed on the back surface of the sheet and the printed matter is seen from a side of a surface opposite to the print surface (front surface). Therefore, the printed image as seen from the front surface is an image obtained by mirror-inverting the printed image as seen from the back surface side.

The print setting information of the print job includes information illustrated in following Table 1 as an example. Note that the print setting information also includes other information such as the number of pages and the number of copies, but they are not herein described. The hue information includes a YMCK value or an RGB value of a hue. In a case where the recording material is not the transparent material, it is possible to handle on the assumption that specification of front printing/back printing is front printing. The print setting information may also include an item of the thickness of the recording material in addition to the basis weight of the recording material.

**[Table 1]**

| Type of recording material | Size of recording material | Basis weight of recording material [g/m²] | Hue of recording material | With or without inspection | Front printing! back printing | Anti-transparency image |
|---|---|---|---|---|---|---|
| Transparent sheet | A4 | 140 | Hue information | With inspection | Back printing | White image |

The control unit 380 controls each unit of the image forming system 100 according to the print setting information of the print job. For example, in a case of obtaining the print setting information illustrated in Table 1, the control unit 380 controls the paper feeding device 200, the image processing unit 310, the image forming unit 320, the paper conveyance unit 340, the fixing unit 350 and the like so as to back print on an A4 transparent sheet with anti-transparency by a white image. The control unit 380 also outputs an instruction to the control unit 430 of the paper conveyance device 400 and the control unit 540 of the inspection device 500 so as to inspect the printed matter output from the image forming device 300. More specifically, it is as follows.

The paper feeding device 200 supplies the sheets one by one to the image forming device 300 in response to an instruction of the control unit 380. The image processing unit 310 of the image forming device 300 rasterizes the print data to generate the printed image data, and the image forming unit 320 forms the toner images on each photoreceptor drum based on the printed image data, and primarily transfers a white image (W) and color image (YMCK) to the intermediate transfer belt 221 in this order.

The color image corresponds to the document image, and the white image corresponds to the anti-transparency image. The color image may be formed of a single-color layer or by overlapping a plurality of single-color layers. The color image and white image transferred to the intermediate transfer belt 221 are secondarily transferred to the sheet supplied from the paper feeding device 200, and the toner images of the color image and white image are fixed by the fixing unit 350.

On the printed matter discharged from the image forming device 300, a layer of the color image and a layer of the anti-transparency image are formed in this order. Therefore, in a case where the anti-transparency image is formed on the document image by back printing on the sheet, when the printed matter is placed on a desk with a pattern and seen from a sheet side (opposite side of the print surface), reflected light from the desk is blocked by the anti-transparency image. This makes it possible to prevent or suppress the pattern of the desk behind the printed matter from affecting an appearance of the printed image.

Note that, in the above-described example, the case where the white image is used as the anti-transparency image is described, but the anti-transparency image is not limited to white (white), and may be, for example, black (black), gold (gold), silver (silver) and the like. White, gold, silver and the like are generally referred to as special colors (or special colors).

The printed matter discharged from the image forming device 300 is supplied to the paper conveyance device 400. In the paper conveyance device 400, the printed matter is conveyed with the front and back sides unchanged to be supplied to the inspection device 500.

### inspection Method>

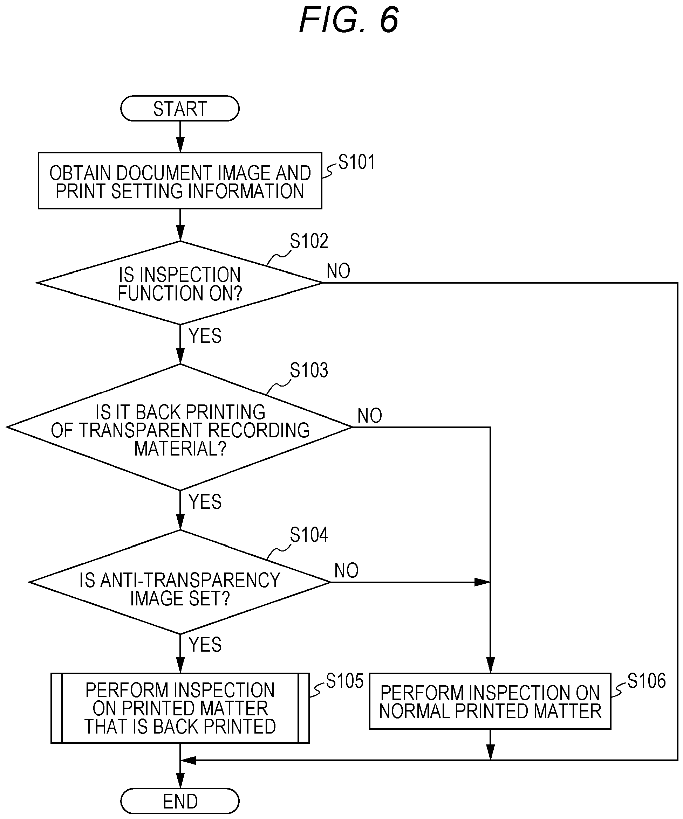

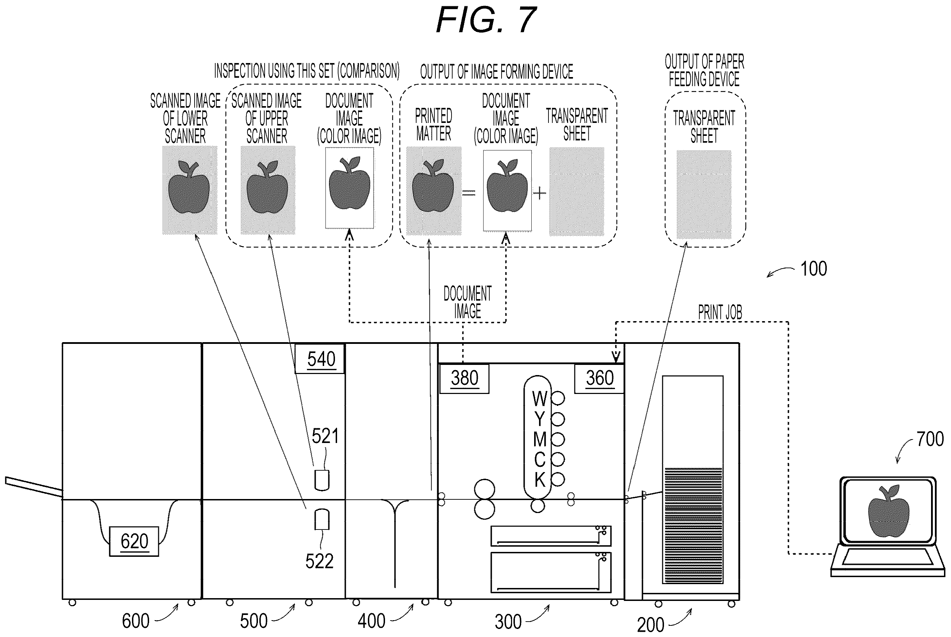

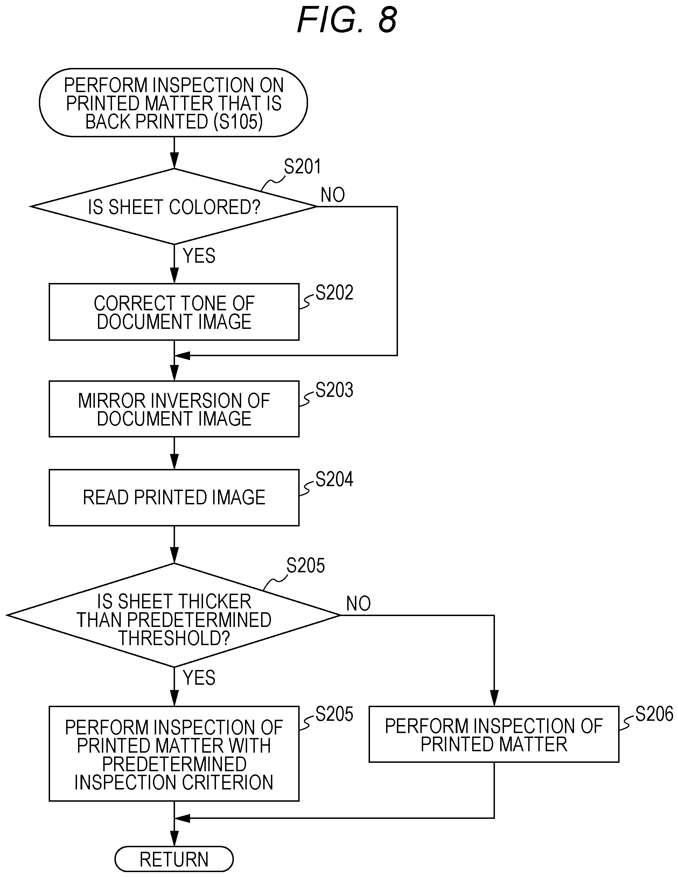

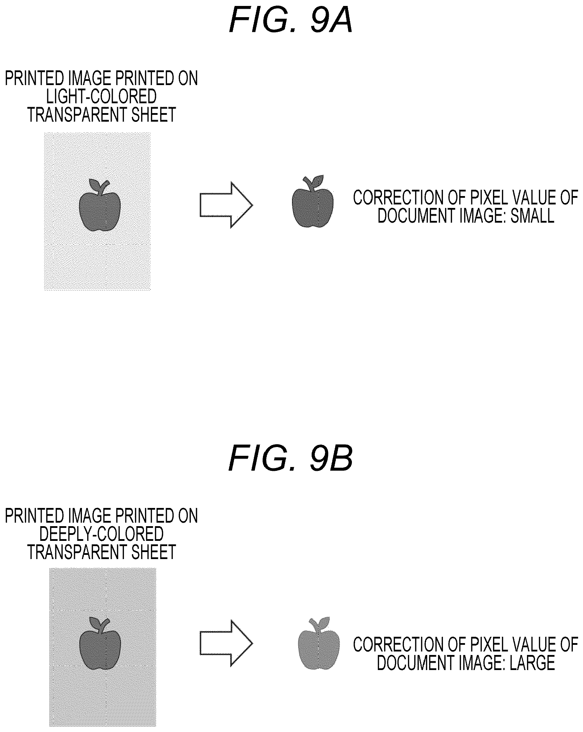

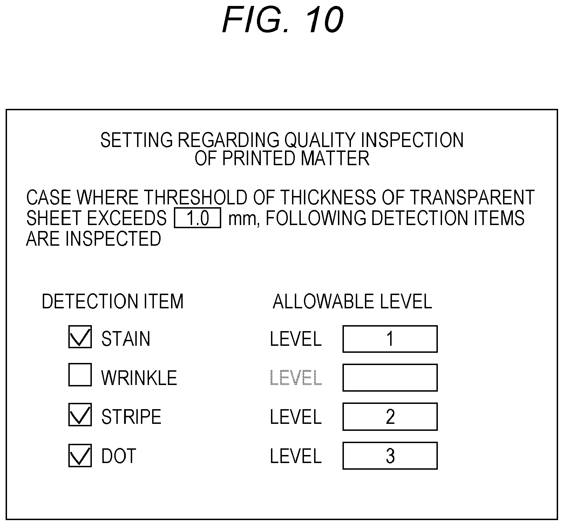

Hereinafter, a procedure of an inspection method of the printed matter by the inspection device 500 of this embodiment is described with reference to Figs. 5 to 10. Fig. 6 is a flowchart illustrating the procedure of the inspection method by the inspection device 500 of this embodiment. Fig. 7 is a schematic diagram for illustrating the inspection method in a case where the anti-transparency image is not formed. Fig. 8 is a subroutine flowchart illustrating a procedure of the inspection of the printed matter that is back printed in the flowchart in Fig. 6. Note that processes in the flowchart in Fig. 6 and the subroutine flowchart in Fig. 8 are realized when the CPU 541 of the control unit 540 executes the inspection program. Figs. 9A and 9B are schematic diagrams illustrating that the pixel value of the document image is corrected according to the hue of the transparent sheet, and Fig. 10 is a schematic diagram illustrating a setting screen regarding the quality inspection of the printed matter.

As illustrated in Fig. 6, first, the document image and the print setting information are obtained (step S101). The control unit 540 obtains, regarding the printed matter printed by the image forming device 300, the corresponding printed image data (document image) and print setting information from the control unit 380 and stores the same in the RAM 543. Note that, in the example illustrated in Fig. 5, although not illustrated for simplifying the description, the document image and print setting information are transmitted from the control unit 380 to the control unit 540 via the communication unit 530. The print setting information obtained by the control unit 540 includes, for example, the type, size, basis weight, and hue information of the recording material, setting of an inspection function, setting of front printing/back printing, setting of the anti-transparency image and the like.

Next, it is determined whether the inspection function is turned on (step S 102). In a case where the inspection function is turned off (step S102: NO), the control unit 540 ends without performing a process of the quality inspection of the printed matter (end).

In contrast, in a case where the inspection function is turned on (step S102: YES), it is determined whether this is the back printing of the transparent recording material (step S103). In a case where the type of the recording material is the transparent material (for example, transparent sheet) and the setting is the back printing (step S103: YES), the control unit 540 further determines whether the anti-transparency image is set (step S104). The control unit 540 serves as an anti-transparency determiner, and determines whether the anti-transparency image is set, thereby determining whether the anti-transparency image is formed on the printed image of the printed matter. In a case where the anti-transparency image is set (step S104: YES), the control unit 540 performs the inspection on the printed matter that is back printed (step S105). More specifically, the control unit 540 performs the quality inspection on the surface on the sheet side of the printed matter, that is, the surface on a side opposite to the print surface (hereinafter, referred to as an "opposite surface"). This is because, in a case where the anti-transparency image is formed on an uppermost layer of the printed matter as illustrated in Fig. 5, appropriate inspection cannot be performed by a method of scanning the print surface of the printed matter and comparing the scanned image with the document image as in the conventional inspection. That is, since the printed image is covered with the anti-transparency image, it is not possible to detect in a case where the printed image has stain and the like. The inspection of the printed matter that is back printed is described later in detail.

In contrast, in a case where the type of the recording material is not the transparent material (for example, normal paper), or the front printing is set (step S103: NO), or anti-transparency is turned off (step S104: NO), the inspection on the normal printed matter is performed (step S106). For example, as illustrated in Fig. 7, the control unit 540 reads the printed image from the print surface side of the printed matter by the upper scanner 522, and compares the scanned image with the document image. In the example illustrated in Fig. 7, the printed matter obtained by printing single-color "apple" on the transparent sheet is output from the image forming device 300, and the scanned image of the upper scanner 522 is compared with the document image.

In a case where the printed image of the printed matter is of a single color, the scanned image is compared with the document image depending on whether the pixel values of the pixels in corresponding pixel positions coincide with each other between the scanned image and the document image. The control unit 540 determines that the printed matter is normal in a case where the pixel values of the scanned image and the document image coincide with each other regarding all the pixels, and determines that the printed matter is abnormal in a case where the pixel values do not coincide with each other. Note that an allowable range may be set to a degree of coincidence of the pixel values in consideration of a reading characteristic, a reading error and the like of the upper scanner 522. The control unit 540 ends the process of the quality inspection of the printed matter after performing the process of the inspection of the printed matter at step S106 (end).

### <Process of Inspection on Printed Matter That Is Back Printed (step S 105)>

As illustrated in Fig. 8, first, it is determined whether the sheet is colored (step S201). In a case where the sheet is colored (S201: YES), a tone of the document image is corrected (step S202). In this embodiment, it is assumed that the sheet is the plain sheet, but a sheet of a uniform color on an entire surface may be used in place of a colorless and transparent sheet. The control unit 540 corrects the tone of the document image by changing the pixel value of the document image based on the hue information of the sheet. For example, in a case where the sheet is colored with cyan, the pixel value corresponding to cyan in the document image is changed according to color depth of the sheet. For example, as illustrated in Fig. 9A, in a case where the color of the sheet is light, correction of the pixel value of the document image is small. In contrast, as illustrated in Fig. 9B, in a case where the color of the sheet is deep, correction of the pixel value of the document image is large. As a result, even if the sheet is colored, the inspection may be performed with high accuracy.

In contrast, in a case where the sheet is not colored (S201: NO), the procedure shifts to step S203 without correcting the tone of the document image. Note that it is also possible to form to correct the tone of the document image based on a result of reading in advance the sheet on which the image is not printed by the upper scanner 522 or the lower scanner 521 and measuring a degree of coloring of the sheet.

Next, the document image is mirror-inverted (step S203). The control unit 540 generates the image obtained by mirror-inverting the document image (hereinafter referred to as the "inverted image") by exchanging pixels located horizontally symmetrically with respect to the central axis of the document image.

Next, the printed image is read (step S204). The control unit 540 reads the printed image from the sheet side of the printed matter, that is, the side opposite to the print surface by the lower scanner 521. The scanned image is transmitted to the control unit 540.

Next, it is determined whether the sheet is thicker than a predetermined threshold (step S205). The control unit 540 estimates the thickness of the sheet based on, for example, the basis weight and size of the sheet, and determines whether the sheet is thicker than the predetermined threshold. The predetermined threshold is not especially limited, but may be, for example, about 0.1 to 1.5 mm. Note that, in a case where the print setting information includes information regarding the thickness of the sheet, this information may be used for determining. In a case where the sheet is thicker than the predetermined threshold, light attenuation and reflection by the sheet become large, so that image reading accuracy might be low.

Therefore, in this embodiment, the method of performing the inspection of the printed matter may be changed according to the sheet thickness. In a case where the sheet is thicker than the predetermined threshold (step S205: YES), the inspection of the printed matter is performed according to the predetermined inspection criterion (step S206). In contrast, in a case where the sheet is not thicker than the predetermined threshold (step S205: NO), it is determined whether the printed matter is abnormal based on a comparison result between the inverted image and the scanned image of the lower scanner 521. The method of performing the inspection in a case where the sheet is not thicker than the predetermined threshold is described later.

In a case where the sheet is thicker than the predetermined threshold, the predetermined inspection criterion is a determination criterion when determining whether the printed matter is abnormal by detecting inspection items such as stain, wrinkle, stripe, and dot of the printed matter based on a comparison result between the inverted image and the scanned image of the lower scanner 521. The control unit 540 calculates a detection level of the detection item based on the comparison result between the inverted image and the scanned image. More specifically, the control unit 540 detects regarding the detection items of "stain", "wrinkle", "stripe", and "dot" based on an image of a difference between the inverted image and the scanned image, and classifies degrees thereof into three levels of 1 to 3.

In contrast, the control unit 540 receives the detection item and an allowable level thereof. As illustrated in Fig. 10, the user performs setting regarding the quality inspection of the printed matter on the client terminal 700. Setting of the detection item is performed by checking the "detection item". Setting of the allowable level is performed by inputting the level in an "allowable level" field corresponding to the detection item in three levels of 1 to 3. Level 1 has the smallest allowable degree and level 3 has the largest allowable degree. The detection item includes, for example, "stain", "wrinkle", "stripe", and "dot". The set detection item and the allowable level thereof are transmitted to the control unit 540.

The control unit 540 determines that the printed matter is normal in a case where the detection level satisfies the allowable level, and determines that the printed image is abnormal in a case where the allowable level is not satisfied. In the example illustrated in Figs. 9A and 9B, in a case where the detection levels of "stain", "stripe", and "dot" are equal to or lower than "1", "2", and "3", respectively, the detection level satisfies the allowable level, so that the printed matter is determined to be normal.

Note that the levels of the detection level and allowable level are not limited to three levels, and may be two or four or more levels.

In this manner, even in a case where the sheet is thicker than the predetermined threshold, the quality of the printed matter may be inspected regarding the detected item at the allowable level desired by the user.

In contrast, in a case where the sheet is not thicker than the predetermined threshold (step S205: NO), the inspection of the printed matter is performed (step S206). The control unit 540 determines whether the printed image is abnormal by comparing the pixel values in the corresponding pixel positions regarding the inverted image and the scanned image of the lower scanner 521.

In this manner, in the processes illustrated in Figs. 6 and 8, the document image is obtained, and it is determined whether the anti-transparency image is formed on the printed image printed on one surface of the transparent material based on the document image. Then, in a case where it is determined that the anti-transparency image is formed on the printed image, the printed image is read from the side of the other surface opposite to the one surface, and the abnormality of the printed matter is detected based on the document image and the scanned image read from the other surface side. In contrast, in a case where it is determined that the anti-transparency image is not formed on the printed image, the printed image is read from the print surface side of the printed matter, and the abnormality of the printed matter is detected based on the document image and the scanned image read from the print surface side of the printed matter.

Note that, in the above-described example, the case where the inverted image obtained by mirror-inverting the document image is compared with the scanned image is described, but it is not limited to such a case, and the inverted image obtained by mirror-inverting the scanned image may be compared with the document image. Alternatively, the pixel values in mirror-symmetrical pixel positions may be compared regarding the document image and the scanned image.

According to the inspection device 500 of this embodiment described above, the inspection of the printed matter is performed by comparing the scanned image read from the side of the other surface opposite to the print surface of the printed matter that is back printed with the document image, so that it is possible to appropriately perform the inspection even in a case where the quality of the printed matter on which the anti-transparency image is formed is inspected.

As described above, the inspection device 500, the image forming system 100, the inspection method, and the inspection program are described in the embodiment. However, it goes without saying that those skilled in the art may appropriately add, modify, and omit the present invention within the scope of the technical idea.

For example, in the above-described embodiment, the sheet-shaped material is illustrated as the transparent material, but the transparent material may also be a plate-shaped material and the like.

In the above-described embodiment, the case where the primarily transferred color image and white image are secondarily transferred to the sheet to be fixed to the sheet at the same time is described, but the present invention is not limited to such case. For example, the color image may be secondarily transferred to the sheet to be fixed first, and then the white image may be secondarily transferred to the sheet to be fixed. As a result, it is possible to more reliably prevent the color image and the white image from being mixed.

In the above-described embodiment, the case where the inspection device 500 includes the control unit 540 and the control unit 540 determines whether the printed matter is abnormal is described. However, the present invention is not limited to such a case, and the control unit 380 of the image forming device 300 may be formed to play a role of determining whether the printed matter is abnormal.

In the above-described embodiment, the case is described where the paper conveyance device 400 conveys the printed matter supplied from the image forming device 300 to the inspection device 500 as it is without inverting the front and back sides, and the upper scanner 522 reads the print surface side of the printed matter and the lower scanner 521 reads the sheet side of the printed matter in the inspection device 500. However, for example, in a case where it is determined that the anti-transparency image is formed on the printed image, by configuring the paper conveyance device 400 to invert the front and back sides of the sheet, the upper scanner 522 may read irrespective of the print surface side or the sheet side of the printed matter in the inspection device 500. This makes it possible to omit the lower scanner 521.

The inspection program may be provided by a computer-readable recording medium such as a USB memory, a flexible disk, and a CD-ROM, or may be provided online via a network such as the Internet. In this case, the program recorded on the computer-readable recording medium is usually transferred to a memory, a storage and the like to be stored. This inspection program may be provided as single application software, or may be incorporated into software of each device, for example as a function of a server.

In the embodiment, a part or all of the processes executed by the inspection program may be replaced with hardware such as a circuit to be executed.

Although embodiments of the present invention have been described and illustrated in detail, the disclosed embodiments are made for purposes of illustration and example only and not limitation. The object of the invention is achieved by the subject-matter of the independent claims. Advantageous embodiments are defined in the dependent claims.

## Claims

1. An inspection device (500) that performs quality inspection of a printed matter, the inspection device (500) comprising:
an image obtaining unit configured to obtain a document image;
a first reader configured to read the printed matter obtained by forming a printed image on one surface of a transparent material based on the document image from a side of the other surface opposite to the one surface;
an abnormality detection unit configured to detect an abnormality of the printed matter based on the document image and a read image by the first reader;
a material information obtaining unit configured to obtain information regarding the transparent material; and
a pixel value correction unit configured to correct a pixel value of the document image based on the information obtained by the material information obtaining unit, wherein
the material information obtaining unit is configured to obtain information regarding a hue of the transparent material, and
the pixel value correction unit is configured to correct a pixel value of the read image according to the hue of the transparent material.

2. The inspection device (500) according to claim 1, wherein
the transparent material is a sheet-shaped or plate-shaped material.

3. The inspection device (500) according to claim 1 or 2, further comprising:
an anti-transparency determination unit configured to determine whether an anti-transparency image is formed on the printed image; and
a second reader configured to read the printed image from a print surface side of the printed matter, wherein
the abnormality detection unit is configured to
detect, in a case where the anti-transparency determination unit determines that the anti-transparency image is formed on the printed image, the abnormality of the printed matter based on the document image and the read image by the first reader, and
detect, in a case where the anti-transparency determination unit determines that the anti-transparency image is not formed on the printed image, the abnormality of the printed matter based on the document image and a read image by the second reader.

4. The inspection device (500) according to any one of claims 1 to 3, wherein
the abnormality detection unit is configured to
determine whether the printed matter is abnormal by comparing pixel values in corresponding pixel positions between an inverted image obtained by mirror-inverting any one of the document image and the read image and the other image, or by comparing pixel values in mirror-symmetrical pixel positions regarding the document image and the read image.

5. The inspection device (500) according to any one of claims 1 to 3, wherein the abnormality detection unit is configured to
determine that the printed matter is normal in a case where a comparison result between the document image and the read image satisfies a predetermined inspection criterion, and determine that the printed matter is abnormal in a case where the comparison result does not satisfy the predetermined inspection criterion.

6. The inspection device (500) according to claim 5, further comprising:
a material information obtaining unit configured to obtain information regarding the transparent material; and
an inspection criterion adjusting unit configured to adjust the predetermined inspection criterion based on the information obtained by the material information obtaining unit, wherein
the material information obtaining unit is configured to obtain information regarding a basis weight or a thickness of the transparent material, and
the inspection criterion adjusting unit is configured to adjust the predetermined inspection criterion according to the basis weight or thickness.

7. The inspection device (500) according to claim 6, wherein
the predetermined inspection criterion is a criterion of a detection item of the quality inspection of the printed matter, and
the inspection criterion adjusting unit is configured to
receive, in a case where the basis weight or thickness of the transparent material exceeds a predetermined threshold corresponding to the basis weight or thickness, an input of the detection item and an allowable level regarding the detection item, and
the abnormality detection unit is configured to
calculate a detection level of the detection item based on the document image and the read image, and determine that the printed matter is normal in a case where the detection level satisfies the allowable level received by the inspection criterion adjusting unit, and determine that the printed image is abnormal in a case where the allowable level is not satisfied.

8. An image forming system comprising:
an image forming device (300) configured to form an image on one surface of a transparent material based on a document image to output as a printed matter;
the inspection device (500) according to any one of claims 1 to 7 that inspects a quality of the printed matter; and
a paper conveyance device (400) configured to convey the printed matter output by the image forming device (300) to the inspection device (500).

9. An inspection method of an inspection device (500) that performs quality inspection of a printed matter, the method comprising:
(a) obtaining a document image;
(b) reading the printed matter obtained by forming a printed image on one surface of a transparent material based on the document image from a side of the other surface opposite to the one surface;
(c) detecting abnormality of the printed matter based on the document image and a read image read from the other surface side; and
obtaining information regarding the transparent material; and
correcting a pixel value of the document image based on the obtained information regarding the transparent material, wherein
the obtained information comprises information regarding a hue of the transparent material, and
the pixel value of the read image is corrected according to the hue of the transparent material.

10. The inspection method according to claim 9, wherein
the transparent material is a sheet-shaped or plate-shaped material.

11. The image inspection method according to claim 9 or claim 10, further comprising:
determining whether an anti-transparency image is formed on the printed image;
reading the printed image from a print surface side of the printed matter;
detecting, in a case where it is determined that the anti-transparency image is formed on the printed image, the abnormality of the printed matter based on the document image and the read image read from the other surface side; and
detecting, in a case where it is determined that the anti-transparency image is not formed on the printed image, the abnormality of the printed matter based on the document image and a read image read from the print surface side of the printed matter.

12. The inspection method according to any one of claims 9 to 11, wherein
at the (c),
it is determined whether the printed matter is abnormal by comparing pixel values in corresponding pixel positions between an inverted image obtained by mirror-inverting any one of the document image and the read image and the other image, or by comparing pixel values in mirror-symmetrical pixel positions regarding the document image and the read image.

13. The inspection method according to any of claims 9 to 11, wherein
at the (c),
it is determined that the printed matter is normal in a case where a comparison result between the document image and the read image satisfies a predetermined inspection criterion, and determines that the printed matter is abnormal in a case where the comparison result does not satisfy the predetermined inspection criterion.

14. An inspection program for allowing a computer to execute a process included in the inspection method according to any one of claims 9 to 13.

## Patentansprüche

1. Inspektionsvorrichtung (500), die eine Qualitätsinspektion eines Druckerzeugnisses durchführt, wobei die Inspektionsvorrichtung (500) umfasst:
eine Bildbezugseinheit, die konfiguriert ist, um ein Dokumentenbild zu beziehen
ein erstes Lesegerät, das konfiguriert ist, um das Druckerzeugnis, das durch Bilden eines gedruckten Bildes auf einer Oberfläche eines transparenten Materials auf der Grundlage des Dokumentenbildes bezogen wird, von einer Seite der anderen Oberfläche gegenüber der einen Oberfläche zu lesen;
eine Anomalieerfassungseinheit, die konfiguriert ist, um eine Anomalie des Druckerzeugnisses auf der Grundlage des Dokumentenbildes und des von dem ersten Lesegerät gelesenen Bildes zu erfassen;
eine Materialinformations-Bezugseinheit, die konfiguriert ist, um Informationen über das transparente Material zu beziehen; und
eine Pixelwert-Korrektureinheit, die konfiguriert ist, um einen Pixelwert des Dokumentenbildes auf der Grundlage der von der Materialinformations-Bezugseinheit bezogenen Informationen zu korrigieren, wobei
die Materialinformations-Bezugseinheit konfiguriert ist, um Informationen über einen Farbton des transparenten Materials zu beziehen, und
die Pixelwert-Korrektureinheit konfiguriert ist, um einen Pixelwert des gelesenen Bildes entsprechend dem Farbton des transparenten Materials zu korrigieren.

2. Inspektionsvorrichtung (500) nach Anspruch 1, wobei
das transparente Material ein blattförmiges oder plattenförmiges Material ist.

3. Inspektionsvorrichtung (500) nach Anspruch 1 oder 2, weiter umfassend:
eine Antitransparenz-Bestimmungseinheit, die konfiguriert ist, um zu bestimmen, ob ein Antitransparenzbild auf dem Druckerzeugnis gebildet ist; und
ein zweites Lesegerät, das konfiguriert ist, um das gedruckte Bild von einer Druckoberflächenseite des Druckerzeugnisses zu lesen, wobei
die Anomalieerfassungseinheit konfiguriert ist, um
in einem Fall, in dem die Antitransparenz-Bestimmungseinheit bestimmt, dass das Antitransparenzbild auf dem gedruckten Bild gebildet ist, die Anomalie des Druckerzeugnisses auf der Grundlage des Dokumentenbildes und des von dem ersten Lesegerät gelesenen Bildes zu erfassen, und
in einem Fall, in dem die Antitransparenz-Bestimmungseinheit bestimmt, dass das Antitransparenzbild nicht auf dem gedruckten Bild gebildet ist, die Anomalie des Druckerzeugnisses auf der Grundlage des Dokumentenbildes und eines von dem zweiten Lesegerät gelesenen Bildes zu erfassen.

4. Inspektionsvorrichtung (500) nach einem der Ansprüche 1 bis 3, wobei die Anomalieerfassungseinheit konfiguriert ist, um
zu bestimmen, ob das Druckerzeugnis anormal ist, indem sie Pixelwerte in entsprechenden Pixelpositionen zwischen einem invertierten Bild, das durch Spiegeln eines beliebigen von dem Dokumentenbild und dem gelesenen Bild bezogen wird, und dem anderen Bild vergleicht, oder indem sie Pixelwerte in spiegelsymmetrischen Pixelpositionen in Bezug auf das Dokumentenbild und das gelesene Bild vergleicht.

5. Inspektionsvorrichtung (500) nach einem der Ansprüche 1 bis 3, wobei die Anomalieerfassungseinheit konfiguriert ist, um
zu bestimmen, dass das Druckerzeugnis normal ist, in einem Fall, in dem ein Vergleichsergebnis zwischen dem Dokumentenbild und dem gelesenen Bild ein vorbestimmtes Inspektionskriterium erfüllt, und zu bestimmen, dass das Druckerzeugnis anormal ist, in einem Fall, in dem das Vergleichsergebnis das vorbestimmte Inspektionskriterium nicht erfüllt.

6. Inspektionsvorrichtung (500) nach Anspruch 5, weiter umfassend:
eine Materialinformations-Bezugseinheit, die konfiguriert ist, um Informationen über das transparente Material zu beziehen; und
eine Inspektionskriterium-Einstelleinheit, die konfiguriert ist, um das vorbestimmte Inspektionskriterium auf der Grundlage der von der Materialinformations-Bezugseinheit bezogenen Informationen einzustellen, wobei
die Materialinformations-Bezugseinheit konfiguriert ist, um Informationen über ein Flächengewicht oder eine Dicke des transparenten Materials zu beziehen, und
die Inspektionskriterium-Einstelleinheit konfiguriert ist, um das vorbestimmte Inspektionskriterium entsprechend dem Flächengewicht oder der Dicke einzustellen.

7. Inspektionsvorrichtung (500) nach Anspruch 6, wobei
das vorbestimmte Inspektionskriterium ein Kriterium eines Erfassungselements der Qualitätsinspektion des Druckerzeugnisses ist, und
die Inspektionskriterium-Einstelleinheit konfiguriert ist, um
in einem Fall, in dem das Flächengewicht oder die Dicke des transparenten Materials einen vorbestimmten Schwellenwert, der dem Flächengewicht oder der Dicke entspricht, überschreitet, eine Eingabe des Erfassungselements und ein zulässiges Niveau in Bezug auf das Erfassungselement zu empfangen, und
die Anomalieerfassungseinheit konfiguriert ist, um
ein Erfassungsniveau des Erfassungselements auf der Grundlage des Dokumentenbildes und des gelesenen Bildes zu berechnen und zu bestimmen, dass das Druckerzeugnis normal ist, in einem Fall, in dem das Erfassungsniveau das von der Inspektionskriterium-Einstelleinheit empfangene zulässige Niveau erfüllt, und zu bestimmen, dass das Druckerzeugnis anormal ist, in einem Fall, in dem das zulässige Niveau nicht erfüllt ist.

8. Bilderzeugungssystem, umfassend:
eine Bilderzeugungsvorrichtung (300), die konfiguriert ist, um ein Bild auf einer Oberfläche eines transparenten Materials auf der Grundlage eines Dokumentenbildes zur Ausgabe als Druckerzeugnis zu bilden;
die Inspektionsvorrichtung (500) nach einem der Ansprüche 1 bis 7, die eine Qualität der Druckerzeugnisse inspiziert; und
eine Papiertransportvorrichtung (400), die konfiguriert ist, um das von der Bilderzeugungsvorrichtung (300) ausgegebenen Druckerzeugnis zu der Inspektionsvorrichtung (500) zu transportieren.

9. Inspektionsverfahren einer Inspektionsvorrichtung (500), die eine Qualitätsinspektion eines Druckerzeugnisses durchführt, wobei das Verfahren umfasst:
(a) Beziehen eines Dokumentenbildes;
(b) Lesen des Druckerzeugnisses, das durch Bilden eines gedruckten Bildes auf einer Oberfläche eines transparenten Materials auf der Grundlage des Dokumentenbildes bezogen wird, von einer Seite der anderen Oberfläche gegenüber der einen Oberfläche;
(c) Erfassen von Anomalien des Druckerzeugnisses auf der Grundlage des Dokumentenbildes und eines gelesenen Bildes, das von der anderen Oberflächenseite gelesen wird; und
Beziehen von Informationen über das transparente Material; und
Korrigieren eines Pixelwertes des Dokumentenbildes auf der Grundlage der bezogenen Informationen über das transparente Material, wobei
die bezogenen Informationen Informationen über einen Farbton des transparenten Materials umfassen, und
der Pixelwert des gelesenen Bildes entsprechend dem Farbton des transparenten Materials korrigiert wird.

10. Inspektionsverfahren nach Anspruch 9, wobei
das transparente Material ein blattförmiges oder plattenförmiges Material ist.

11. Inspektionsverfahren nach Anspruch 9 oder Anspruch 10, weiter umfassend:
Bestimmen, ob auf dem gedruckten Bild ein Antitransparenzbild gebildet ist;
Lesen des gedruckten Bildes von einer Seite der Druckoberfläche des Druckerzeugnisses;
Erfassen, in einem Fall, in dem bestimmt wird, dass das Antitransparenzbild auf dem gedruckten Bild gebildet ist, der Anomalie des Druckerzeugnisses auf der Grundlage des Dokumentenbildes und des von der anderen Oberflächenseite gelesenen Bildes; und
Erfassen, in einem Fall, in dem bestimmt wird, dass das Antitransparenzbild nicht auf dem gedruckten Bild gebildet ist, der Anomalie des Druckerzeugnisses auf der Grundlage des Dokumentenbildes und eines gelesenen Bildes, das von der anderen Druckoberfläche des Druckerzeugnisses gelesen wird.

12. Inspektionsverfahren nach einem der Ansprüche 9 bis 11, wobei
bei (c)
bestimmt wird, ob das Druckerzeugnis anormal ist, indem Pixelwerte in entsprechenden Pixelpositionen zwischen einem invertierten Bild, das durch Spiegeln eines beliebigen von dem Dokumentenbild und dem gelesenen Bild bezogen wird, und dem anderen Bild verglichen werden, oder indem Pixelwerte in spiegelsymmetrischen Pixelpositionen in Bezug auf das Dokumentenbild und das gelesene Bild verglichen werden.

13. Inspektionsverfahren nach einem der Ansprüche 9 bis 11, wobei
bei (c)
bestimmt wird, dass das Druckerzeugnis normal ist, in einem Fall, in dem ein Vergleichsergebnis zwischen dem Dokumentenbild und dem gelesenen Bild ein vorbestimmtes Inspektionskriterium erfüllt, und bestimmt wird, dass das Druckerzeugnis anormal ist, in einem Fall, in dem das Vergleichsergebnis das vorbestimmte Inspektionskriterium nicht erfüllt.

14. Inspektionsprogramm, um einem Computer zu ermöglichen, einen Prozess auszuführen, der in dem Inspektionsverfahren nach einem der Ansprüche 9 bis 13 eingeschlossen ist.

## Revendications

1. Dispositif d'inspection (500) qui met en oeuvre une inspection de qualité d'un imprimé, le dispositif d'inspection (500), comprenant :
une unité d'obtention d'image configurée pour obtenir une image de document ;
un premier lecteur configuré pour lire l'imprimé obtenu en formant une image imprimée sur une surface d'un matériau transparent sur la base de l'image de document à partir d'un côté de l'autre surface opposée à la première surface ;
une unité de détection d'anomalie configurée pour détecter une anomalie de l'imprimé sur la base de l'image de document et d'une image lue par le premier lecteur ;
une unité d'obtention d'informations de matériau configurée pour obtenir des informations relatives au matériau transparent ; et
une unité de correction de valeur de pixel configurée pour corriger une valeur de pixel de l'image de document sur la base des informations obtenues par l'unité d'obtention d'informations de matériau, dans lequel
l'unité d'obtention d'informations de matériau est configurée pour obtenir des informations relatives à une teinte du matériau transparent, et
l'unité de correction de valeur de pixel est configurée pour corriger une valeur de pixel de l'image lue suivant la teinte du matériau transparent.

2. Dispositif d'inspection (500) selon la revendication 1, dans lequel
le matériau transparent est un matériau en forme de feuille ou en forme de plaque.

3. Dispositif d'inspection (500) selon la revendication 1 ou la revendication 2, comprenant en outre :
une unité de détermination d'anti-transparence configurée pour déterminer si une image anti-transparence est formée sur l'image imprimée ; et
un second lecteur configuré pour lire l'image imprimée à partir d'un côté de surface d'impression de l'imprimé, dans lequel
l'unité de détection d'anomalie est configurée pour
détecter, dans un cas où l'unité de détermination d'anti-transparence détermine que l'image anti-transparence est formée sur l'image imprimée, l'anomalie de l'imprimé sur la base de l'image de document et de l'image lue par le premier lecteur, et
détecter, dans un cas où l'unité de détermination d'anti-transparence détermine que l'image anti-transparence n'est pas formée sur l'image imprimée, l'anomalie de l'imprimé sur la base de l'image de document et d'une image lue par le second lecteur.

4. Dispositif d'inspection (500) selon l'une quelconque des revendications 1 à 3, dans lequel l'unité de détection d'anomalie est configurée pour
déterminer si l'imprimé est anormal en comparant des valeurs de pixel dans des positions de pixel correspondantes entre une image inversée obtenue par inversion en miroir de l'une quelconque de l'image de document et de l'image lue et l'autre image, ou en comparant des valeurs de pixel dans des positions de pixel symétriques en miroir relatives à l'image de document et à l'image lue.

5. Dispositif d'inspection (500) selon l'une quelconque des revendications 1 à 3, dans lequel l'unité de détection d'anomalie est configurée pour
déterminer que l'imprimé est normal dans un cas où un résultat de comparaison entre l'image de document et l'image lue satisfait à un critère d'inspection prédéterminé, et déterminer que l'imprimé est anormal dans un cas où le résultat de comparaison ne satisfait pas au critère d'inspection prédéterminé.

6. Dispositif d'inspection (500) selon la revendication 5, comprenant en outre :
une unité d'obtention d'informations de matériau configurée pour obtenir des informations relatives au matériau transparent ; et
une unité de réglage de critère d'inspection configurée pour régler le critère d'inspection prédéterminé sur la base des informations obtenues par l'unité d'obtention d'informations de matériau, dans lequel
l'unité d'obtention d'informations de matériau est configurée pour obtenir des informations relatives à un poids ou une épaisseur de base du matériau transparent, et
l'unité de réglage de critère d'inspection est configurée pour régler le critère d'inspection prédéterminé suivant le poids ou l'épaisseur de base.

7. Dispositif d'inspection (500) selon la revendication 6, dans lequel
le critère d'inspection prédéterminé est un critère d'un élément de détection de l'inspection de qualité de l'imprimé, et
l'unité de réglage de critère d'inspection est configurée pour
recevoir, dans un cas où le poids ou l'épaisseur de base du matériau transparent dépasse un seuil prédéterminé correspondant au poids ou à l'épaisseur de base, une entrée de l'élément de détection et un niveau admissible relatif à l'élément de détection, et
l'unité de détection d'anomalie est configurée pour
calculer un niveau de détection de l'élément de détection sur la base de l'image de document et de l'image lue, et déterminer que l'imprimé est normal dans un cas où le niveau de détection satisfait le niveau admissible reçu par l'unité de réglage de critère d'inspection, et déterminer que l'image imprimée est anormale dans un cas où le niveau admissible n'est pas satisfait.

8. Système de formation d'image, comprenant :
un dispositif (300) de formation d'image configuré pour former une image sur une surface d'un matériau transparent sur la base d'une image de document à émettre en tant qu'imprimé ;
le dispositif d'inspection (500) selon l'une quelconque des revendications 1 à 7 qui inspecte une qualité de l'imprimé ; et
un dispositif (400) d'acheminement de papier configuré pour acheminer l'imprimé émis par le dispositif (300) de formation d'image vers le dispositif d'inspection (500).

9. Procédé d'inspection d'un dispositif d'inspection (500) qui met en oeuvre une inspection de qualité d'un imprimé, le procédé comprenant :
(a) l'obtention d'une image de document ;
(b) la lecture de l'imprimé obtenu en formant une image imprimée sur une surface d'un matériau transparent sur la base de l'image de document à partir d'un côté de l'autre surface opposée à la première surface ;
(c) la détection d'une anomalie de l'imprimé sur la base de l'image de document et d'une image lue à partir de l'autre côté de surface ; et
l'obtention d'informations relatives au matériau transparent ; et
la correction d'une valeur de pixel de l'image de document sur la base des informations obtenues relatives au matériau transparent, dans lequel
les informations obtenues comprennent des informations relatives à une teinte du matériau transparent, et
la valeur de pixel de l'image lue est corrigée suivant la teinte du matériau transparent.

10. Procédé d'inspection selon la revendication 9, dans lequel
le matériau transparent est un matériau en forme de feuille ou en forme de plaque.

11. Procédé d'inspection selon la revendication 9 ou la revendication 10, comprenant en outre :
la détermination si une image anti-transparence est formée sur l'image imprimée ;
la lecture de l'image imprimée à partir d'un côté de surface d'impression de l'imprimé ;
la détection, dans un cas où il est déterminé que l'image antitransparence est formée sur l'image imprimée, de l'anomalie de l'imprimé sur la base de l'image de document et de l'image lue à partir de l'autre côté de surface ; et
la détection, dans un cas où il est déterminé que l'image antitransparence n'est pas formée sur l'image imprimée, de l'anomalie de l'imprimé sur la base de l'image de document et d'une image lue à partir du côté de surface d'impression de l'imprimé.

12. Procédé d'inspection selon l'une quelconque des revendications 9 à 11, dans lequel
au point (c),
il est déterminé si l'imprimé est anormal en comparant des valeurs de pixel dans des positions de pixel correspondantes entre une image inversée obtenue par inversion en miroir de l'une quelconque de l'image de document et de l'image lue et l'autre image, ou en comparant des valeurs de pixel dans des positions de pixel symétriques en miroir relatives à l'image de document et à l'image lue.

13. Procédé d'inspection selon l'une quelconque des revendications 9 à 11, dans lequel
au point (c),
il est déterminé que l'imprimé est normal dans un cas où un résultat de comparaison entre l'image de document et l'image lue satisfait à un critère d'inspection prédéterminé, et il est déterminé que l'imprimé est anormal dans un cas où le résultat de comparaison ne satisfait pas au critère d'inspection prédéterminé.

14. Programme d'inspection permettant à un ordinateur de mettre en oeuvre un processus inclus dans le procédé d'inspection selon l'une quelconque des revendications 9 à 13.
